# FASCICULE DE BREVET EUROPEEN

(11) **EP 2 709 826 B1**
(45) Date de publication et mention de la délivrance du brevet: **03.06.2015**
(21) Numéro de dépôt: 12719770.5
(22) Date de dépôt: 11.05.2012
(51) Int. Cl.: B29C 65/20, B29C 65/50, B32B 3/06, F16B 5/01, F16B 5/08, F16S 1/02, B29C 65/00, B62D 33/02, E04C 2/36, B29C 53/06, B29L 7/00, B29L 9/00, B29L 24/00, B29L 31/30, B29L 31/60

(54) **PANNEAU COMPOSITE ET SON PROCÉDÉ DE RÉALISATION**
VERBUNDPLATTE UND VERFAHREN ZU IHRER HERSTELLUNG
COMPOSITE PANEL AND PROCESS FOR PRODUCING SAME

(30) Priorité: 11.05.2011 FR 1154083
(43) Date de publication de la demande: 26.03.2014
(73) Titulaire: SOLIGHT, 43600 Sainte Sigolène (FR)
(72) Inventeur: MOULIN, Vincent, F-84240 ANSOUIS (FR); DUCHENE, Rainer, Natick Massachusetts 01760 (US)
(74) Mandataire: Chevalier, Renaud Philippe
(86) Numéro de dépôt international: PCT/EP2012/058828
(87) Numéro de publication internationale: WO 2012/152936

(56) Documents cités:
- WO-A2-2007/113782
- WO-A2-2009/017864
- FR-A1- 2 711 744
- US-B1- 6 284 089

## Description

### DOMAINE TECHNIQUE ET ART ANTERIEUR

La présente invention concerne un panneau composite, pouvant notamment être utilisé dans la réalisation de grandes surfaces, par exemple de longueur supérieure à 10 m et de largeur comprise entre 1 m et 3 m ou entre 1 m et 10 m, pour une épaisseur qui peut atteindre une dizaine de centimètres.

Elle concerne également un panneau composite pouvant être aisément utilisé dans la réalisation d'objets en trois dimensions, présentant des zones de pliage ou de cintrage ou de courbure.

Elle concerne également un procédé de réalisation d'un panneau composite.

Elle concerne également de nouvelles structures de panneaux élémentaires. Ces panneaux élémentaires peuvent être par exemple utilisés dans le cadre de la structure de panneau composite selon l'invention, ou dans le cadre d'un procédé de réalisation d'un panneau composite selon l'invention.

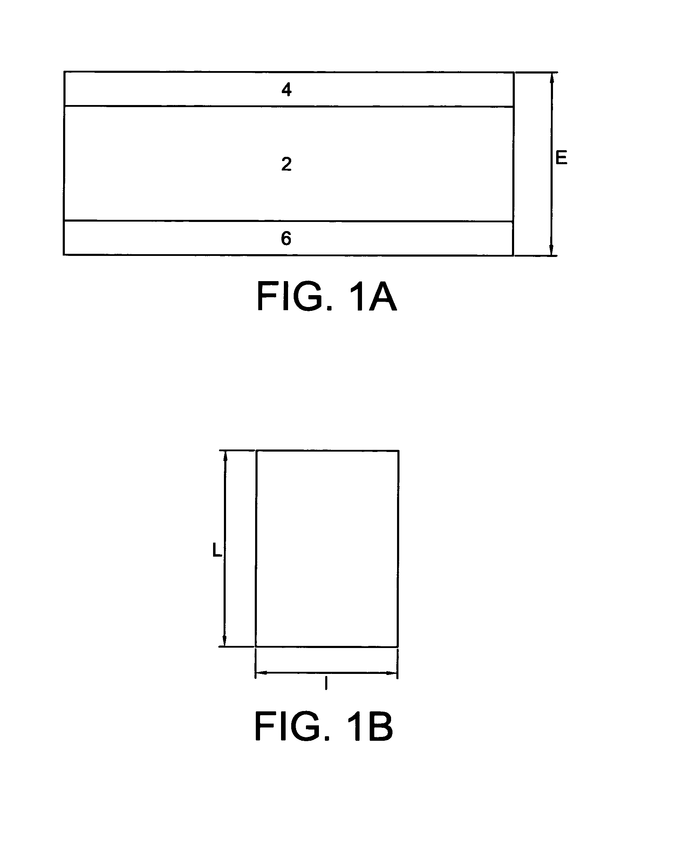

On connaît une structure de panneau, illustrée en figure 1A, présentant une âme, ou un noyau, 2, inséré entre deux couches 4, 6 dénommées « peaux ». Typiquement, comme on le voit sur la vue de dessus de la figure 1B, un tel panneau a une largeur l d'environ 1 m, et une longueur L comprise par exemple entre 2 m et 8 m.

Il existe des techniques d'assemblage de tels panneaux, pour réaliser des grandes surfaces, mais celles-ci ne donnent pas satisfaction, que ce soit pour des raisons esthétiques, du fait des zones de raccord entre les panneaux voisins, ou du fait de la difficulté à réaliser des formes tridimensionnelles avec de tels panneaux résultant de l'assemblage de panneaux composites élémentaires.

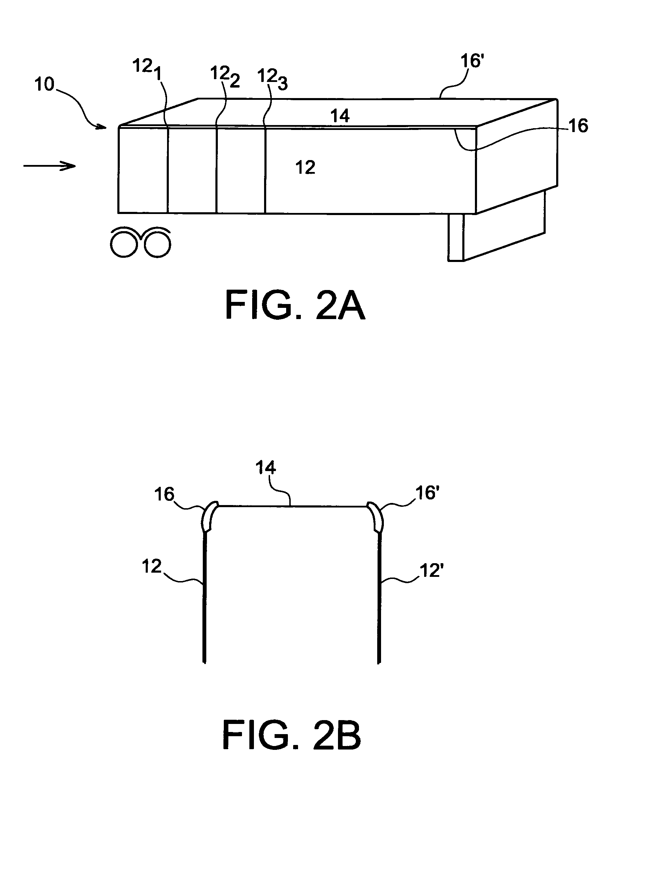

Un exemple d'application de ce type de panneaux concerne la réalisation d'éléments de carrosserie, par exemple la carcasse d'une remorque ou d'un camion. On a représenté, en figures 2A et 2B (cette dernière étant une vue selon la flèche portée en figure 2A), de manière très schématique, la structure d'une remorque 10, à l'arrêt. Cette remorque est constituée essentiellement de panneaux latéraux 12, 12', 14, chacun formant une surface latérale ou une surface supérieure, et l'ensemble, après assemblage, délimitant le volume à l'intérieur duquel les marchandises vont pouvoir être entreposées. On a représenté, plus précisément, en figure 2A, des lignes 12₁, 12₂, 12₃, qui sont les lignes le long desquelles des panneaux voisins sont assemblés pour constituer une surface continue, ici la surface latérale 12. Après constitution de chacune des surfaces 12, 12', 14, celles-ci sont assemblées par l'intermédiaire de cornières 16, 16'. Cet assemblage nécessite donc la mise en oeuvre de pièces additionnelles, en vue de réaliser une structure qui n'est pas seulement plane, mais qui a une constitution tridimensionnelle.

On comprend que ce type d'assemblage est long à réaliser et nécessite des étapes d'alignement de grandes surfaces telles que les surfaces 12 et 14, qui sont, par leur taille, peu maniables.

Il se pose donc le problème de trouver une nouvelle technique de réalisation de panneaux composites, en particulier adaptés à la réalisation de grandes surfaces, qui ne présente pas les inconvénients exposés ci-dessus.

Chacun des documents US6284089B1, WO2007113782A2, WO2009017864A2 et FR2711744A1 divulgue un panneau composite ou un procédé de fabrication de panneau composite respectivement selon le préambule de la revendication 1 ou 11. Cependant, les problèmes précités se posent aussi pour chacun de ces panneaux composites et/ou procédés de fabrication de panneaux composites.

On cherche en particulier une structure permettant de réaliser des surfaces tridimensionnelles de manière simple, sans mettre en oeuvre de pièces additionnelles telles que les cornières utilisées couramment dans les structures connues.

On cherche également une nouvelle structure de panneau composite, renforcée et plus solide que les panneaux de type connus, afin de supporter des contraintes en compression et en extension, notamment lorsque les panneaux sont assemblés pour former de grandes surfaces.

### EXPOSÉ DE L'INVENTION

On décrit justement, dans la présente demande, une structure de panneau composite, comprenant :
- une pluralité de panneaux composites élémentaires, chacun comportant au moins une âme et deux parois ou peaux superficielles et chacun étant assemblé avec au moins un panneau élémentaire voisin par l'un de ses côtés,
- une zone de renfoncement ou d'amincissement, ou en creux, de part et d'autre d'une zone ou ligne d'assemblage et le long de celle-ci,
- une bande de matière de renfort disposée sur ladite zone ou ligne d'assemblage d'un panneau avec le ou les panneaux voisins, dans chaque zone de renfoncement, ou en creux.

Un tel panneau composite peut comporter en outre une ou plusieurs entailles, chacune étant disposée selon une direction quelconque par rapport auxdites bandes de matière, par exemple parallèle où perpendiculaire à celles-ci, une ou plusieurs entailles formant une ou plusieurs zone(s) de pliage et permettant un pliage du panneau selon la direction de cette ou de ces échancrures.

On décrit également un procédé de fabrication d'un panneau composite comprenant :
a) - l'assemblage d'une pluralité de panneaux composites élémentaires, chacun comportant au moins une âme et deux peaux superficielles, chaque panneau étant assemblé avec au moins un panneau élémentaire voisin par l'un de ses côtés,
b) - la fixation d'une bande de matière de renfort sur chaque zone ou ligne d'assemblage d'un panneau avec le ou les panneaux voisins, dans une zone de renfoncement ou d'amincissement, ou en creux, correspondante, de part et d'autre de la zone ou ligne d'assemblage et le long de celle-ci.

Chaque bande est fixée de manière thermique, sans ajout de colle ou de matériau d'adhésion.

Chaque bande est de préférence en un matériau textile, de préférence encore de même nature que celle des peaux. Chaque bande est homogène, et ne nécessite pas d'opération d'injection.

Une zone de renfoncement ou d'amincissement, ou en creux, peut être obtenue par formation d'une rainure dans la peau, par élimination de la matière de cette dernière, sur une partie de son épaisseur. Dans ce cas, l'âme de chacun des panneaux reste d'épaisseur sensiblement constante.

Selon une autre réalisation, une zone de renfoncement ou d'amincissement, ou en creux, peut être obtenue par l'exercice d'une pression, sur chacun des panneaux à assembler, par exemple lors d'une opération de chauffage, l'épaisseur de la portion correspondante de l'âme dans, ou sous, cette zone, étant réduite par rapport aux zones voisines n'ayant pas subi ladite pression. Dans ce cas, il n'y a pas d'enlèvement de matière de la peau.

Un tel procédé peut comporter en outre la formation d'au moins une entaille, ou d'une zone dans laquelle de la matière à été éliminée, dans au moins l'un des panneaux, selon une direction quelconque par rapport auxdites bandes de matière, par exemple parallèle ou perpendiculaire à celles-ci, cette entaille permettant un pliage du panneau selon sa direction. Cette zone d'entaille ou d'élimination de matière peut pénétrer dans l'âme du ou des panneaux.

On décrit également un procédé de réalisation d'une forme tridimensionnelle comportant une pluralité de panneaux composites, comportant la mise en oeuvre du procédé ci-dessus et décrit dans la présente demande, puis une étape de pliage selon au moins une desdites entailles ; en général on réalisera un pliage suivant une ou plusieurs zones d'entailles. On peut en outre assembler entre elles plusieurs formes tridimensionnelles ainsi réalisées.

Un procédé de fabrication d'un panneau composite ou de réalisation d'une forme tridimensionnelle peut comporter en outre l'élimination d'une zone de matière, par exemple par découpe, dans au moins un des panneaux élémentaires, avant pliage.

Une élimination de bavures peut être réalisée après assemblage des panneaux.

Après fixation des bandes de matières de renfort, on peut en outre recouvrir l'ensemble avec, de chaque côté de la structure ainsi réalisée, au moins une feuille extérieure, par exemple en polypropylène.

Dans un procédé et/ou un dispositif selon invention, un panneau composite tel que décrit ci-dessus peut avoir :
- une largeur, mesurée suivant une direction parallèle aux bandes de matière de renfort, comprise entre 0, 5 m et 5 m ou 10 m,
- et/ou une longueur, mesurée suivant une direction perpendiculaire aux bandes de matière de renfort, comprise entre 1 m et 20 m et/ou au moins égale à 5 m ou à 10 m,
- et/ou une épaisseur, mesurée entre les surfaces extérieures des parois superficielles, comprise entre 5 mm et 100 mm.

En outre, un procédé et/ou un dispositif tel que décrit ci-dessus peut comporter une ou plusieurs des caractéristiques suivantes.

L'âme d'un tel panneau composite élémentaire peut comporter au moins une couche en nid d'abeille et/ou en mousse de polypropylène.

Les parois ou peaux superficielles sont par exemple en polypropylène, éventuellement renforcé par du verre ou tout autre type de renfort.

En variante, la structure d'un panneau élémentaire peut comporter une couche textile, disposée de part et d'autre de l'âme du panneau, et une couche extérieure en polypropylène, chaque couche textile étant disposée entre l'âme du panneau et une couche extérieure.

L'âme d'un tel panneau composite élémentaire peut être hybride, comportant au moins deux couches de nature différente, par exemple comportant une première couche en mousse, une deuxième couche en nid d'abeille, et une troisième couche en mousse.

Un tel panneau composite peut comporter en outre des feuilles extérieures, par exemple en polypropylène, recouvrant les peaux et les bandes de matière de renfort.

La surface extérieure des bandes de renfort peut affleurer la surface extérieure des panneaux voisins, ou dépasser ou être en élévation par rapport à cette surface.

On décrit également, dans la présente demande, une structure de panneau élémentaire, pouvant être utilisé notamment en combinaison avec un procédé, ou avec la structure de panneau composite, qui viennent d'être décrits.

Un tel panneau élémentaire comporte au moins une âme et deux parois ou peaux superficielles.

L'âme peut comporter au moins une couche en nid d'abeille et/ou en mousse de polypropylène.

Les parois ou peaux superficielles sont par exemple en polypropylène, éventuellement renforcé par du verre ou tout autre type de renfort.

En variante, la structure d'un panneau élémentaire peut comporter une couche textile, disposée de part et d'autre de l'âme du panneau, et une couche extérieure, par exemple en polypropylène, chaque couche textile étant disposée entre l'âme du panneau et une couche extérieure.

L'âme d'un tel panneau élémentaire peut être hybride, comportant au moins deux couches de nature différente, par exemple comportant une première couche en mousse, une deuxième couche en nid d'abeille, et une troisième couche en mousse.

Un tel panneau composite peut comporter en outre des feuilles extérieures, par exemple en polypropylène, recouvrant les peaux.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- les figures 1A et 1B représentent schématiquement une structure connue de panneau,
- les figures 2A et 2B représentent schématiquement une structure d'un élément de carrosserie réalisée selon une technique connue,
- les figures 3A - 3C représentent de nouvelles structures obtenues par assemblage de panneaux élémentaires,
- la figure 4 représente également une nouvelle structure de panneau composite, obtenue par assemblage de panneaux élémentaires,
- les figures 5A-5C et 6A-6B représentent de nouvelles structures, obtenue par assemblage de panneaux élémentaires, ces structures étant pliables,
- la figure 7 représente une nouvelle structure de panneau composite, obtenue par assemblage de panneaux élémentaires, cette structure étant pliable,
- les figures 8A - 8B représentent une forme tridimensionnelle, réalisée avec un panneau composite pliable (figure 8A) et un assemblage de deux formes tridimensionnelles (figure 8B),
- les figures 9A-9D permettent d'illustrer les notions de bords, francs ou fermés, d'un panneau élémentaire,
- les figures 10A-10D permettent d'illustrer une manière de réaliser le soudage de 2 panneaux,
- les figures 11A-11C permettent d'illustrer comment on peut réaliser une élimination, ou un ébavurage, de la matière excédentaire, après soudure,
- les figures 12A-12E et 13A - 13D illustrent le renforcement des zones de soudure.
- les figures 14A-14C illustrent des structures de panneaux élémentaires.

### EXPOSÉ DÉTAILLÉ DE MODES DE RÉALISATION PARTICULIERS

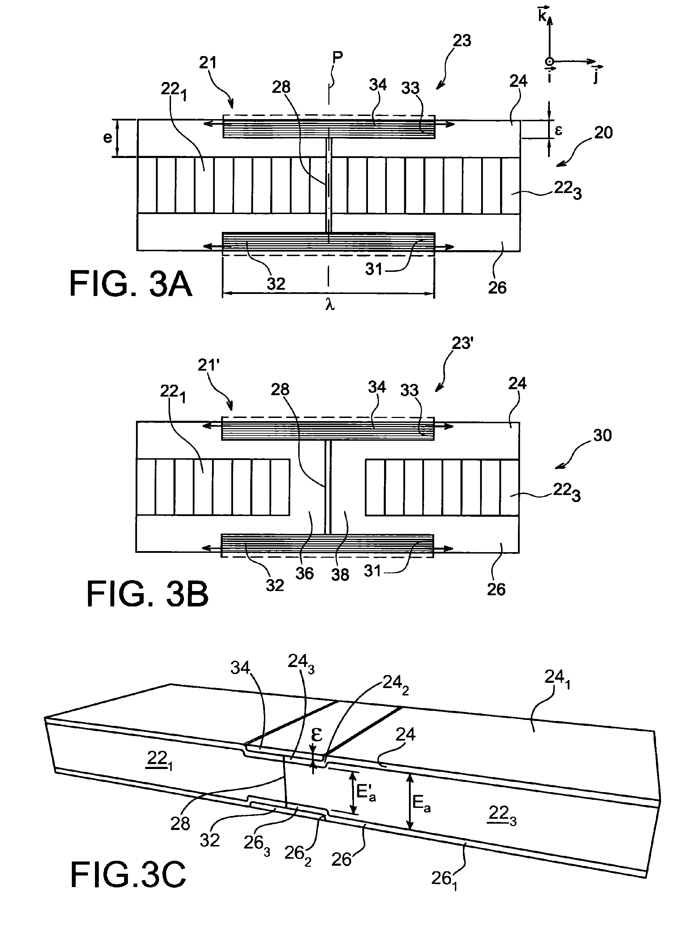

Des exemples de nouvelles structures résultant de l'assemblage de panneaux élémentaires sont illustrées en figures 3A, 3B et 3C.

Sur les différentes figures, on utilise un repère orthogonal Oijk.

Par ailleurs, compte tenu des dimensions obtenues par une pluralité de panneaux assemblés, on appellera plan du ou des panneaux un plan s'étendant suivant l'une des surfaces extérieures de l'assemblage obtenu. Il s'agit du plan Oij ou d'un plan parallèle à celui-ci. Les côtés du panneau s'étendent dans un plan perpendiculaire à Oij; en particulier, les côtés assemblés selon la zone d'assemblage 28 sont dans le plan Oik.

La structure de la figure 3A représente 2 panneaux 21, 23 assemblés par une zone, ou une ligne, de soudure 28 ou de thermo soudure, chaque panneau comportant une âme (ou un noyau) 22₁, 22₃ entourée de part et d'autre par une peau 24, 26. La soudure est réalisée entre deux côtés de chacun des panneaux qui sont situés perpendiculairement au plan de ces panneaux (en sens indiqué ci-dessus). Les panneaux sont assemblés bord à bord, sans élément intermédiaire entre deux bords voisins assemblés.

L'âme est par exemple constituée d'un nid d'abeille, dont les alvéoles s'étendent suivant une direction sensiblement perpendiculaire à chacun des plans définis par le plan des panneaux ou les peaux latérales 24, 26. On verra plus loin des exemples de matériaux pouvant constituer l'âme de chacun des panneaux.

On voit également que, dans chacune des peaux 24, 26, a été réalisée une encoche, ou rainure, 31, 33 dans une zone qui chevauche la zone 28 d'assemblage. La profondeur ε de chacune des encoches est inférieure à l'épaisseur e de chacune des peaux. e est par exemple comprise entre 0,3 mm et 5 mm. ε peut être comprise entre 0,1e et 0,7e, et est de préférence sensiblement égale, ou égale, à 0,5e.

Chaque encoche a une largeur λ sensiblement comprise entre 10 mm et 100 mm, par exemple 40 mm, et est disposée de manière sensiblement symétrique de part et d'autre d'un plan P défini par la zone d'assemblage 28 des deux panneaux. Chaque encoche s'étant suivant une direction perpendiculaire à chacune des figures 3A et 3B, le long de chacun des côtés assemblés de chacun des panneaux. Dans chaque encoche est positionnée une bande de renfort 32, 34, dont la surface extérieure affleure la surface extérieure de la peau correspondante 24, 26 dans laquelle elle est réalisée. En variante (en traits interrompus sur les figures 3A et 3B), la surface extérieure de chaque bande de renfort dépasse au dessus de la surface extérieure de la peau correspondante 24, 26.

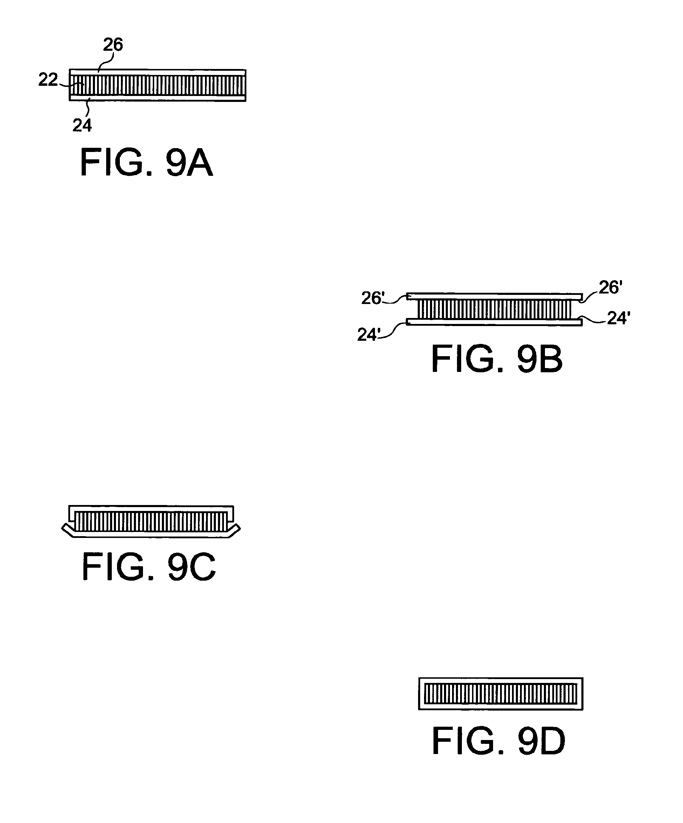

La figure 3B représente un cas où les panneaux utilisés sont de type à structure fermée. La différence entre la structure de la figure 3A et celle de la figure 3B réside donc dans la présence, dans cette dernière, de bords 36, 38, de part et d'autre de la zone de soudure 28, du fait que les panneaux sont de type à bords « fermés » (ce type de structure sera décrit plus en détail, plus loin, en liaison avec les figures 9A-9D), tandis que les panneaux de la figure 3A sont à bords francs. Pour le reste, on retrouve les mêmes références numériques sur ces figures, ces références y désignant des éléments identiques.

Dans les modes de réalisation décrits ci-dessus, notamment en liaison avec les figures 3A et 3B, la surface extérieure de chacune des peaux reste plane, de même que la surface intérieure, qui est en contact avec, ou qui est tournée vers, l'âme 22₁, 22₃. L'épaisseur de cette dernière reste également sensiblement constante, y compris après positionnement des bandes 32,34 de renfort.

La figure 3C, sur laquelle des références numériques identiques à celles des figures 3A et 3B y désignent des éléments identiques ou similaires, représente un cas où il n'y a pas de rainure dans les peaux 24, 26. Chaque bande de renfort est appliquée en la juxtaposant sur, ou contre, les peaux 24, 26 non rainurées, puis en imposant une pression, perpendiculairement au plan Oij des panneaux, vers la zone dans laquelle l'élément de renfort doit être inséré. Un procédé détaillé de réalisation est décrit plus loin. De ce fait, l'âme 22₁, 22₃ est comprimée entre les deux portions des peaux 24,26 sur lesquelles les bandes 32,34 sont plaquées. Ceci s'applique également au cas d'un panneau à structure fermée, comme celui de la figure 3B. La surface de la peau est donc incurvée vers l'intérieur du panneau correspondant. La peau présente donc, en dehors des zones d'assemblage, une première portion 24₁, 26₁ qui est plane. Elle comporte également une zone de transition 24₂, 26₂ vers la zone d'assemblage, zone de transition qui est incurvée vers l'intérieur du panneau. Enfin, elle comporte une deuxième portion plane 24₃, 26₃, mais en retrait par rapport à la première portion.

Soit Eₐ l'épaisseur de l'âme dans les zones dans lesquelles aucune bande de renfort n'est positionnée. Contrairement au cas des figures 3A et 3B (où l'âme a alors une épaisseur constante), l'âme a, dans les zones où les bandes de renforts 32,34 sont positionnées, une épaisseur E'ₐ < Eₐ. Mais, par ailleurs, il n'y a pas eu besoin d'éliminer la matière des peaux 24, 26.

Si les bande de renfort 32, 34, d'épaisseur ε, ont une surface extérieure qui affleure la surface extérieure de la peau correspondante 24, 26, alors on a, sensiblement : 2ε + E'ₐ ≈ Eₐ. En variante, la surface extérieure de chaque bande de renfort dépasse au dessus de la surface extérieure de la peau correspondante 24, 26. Selon un exemple, si e l'épaisseur de la peau, alors, dans chaque bloc de renfort, l'épaisseur du matériau, de part et d'autre de l'âme, est d'environ e + ε. On peut avoir, par exemple e = ε c'est-à-dire que l'épaisseur de la bande de renforts est sensiblement égale à l'épaisseur de la peau. Selon un exemple, si cette dernière est environ égale à 0,7 mm, alors, dans chaque zone de renfort, l'épaisseur de la peau et de la bande de renfort atteint environ 1,4 mm.

Dans tous les cas, chaque bande va permettre de renforcer la structure lorsqu'une tension, telle que représentée schématiquement en figure 3A par des flèches disposées de part et d'autre des bandes 32, 34 est exercée, du fait d'un mouvement de l'un des panneaux par rapport à l'autre. On en verra un exemple ci-dessous.

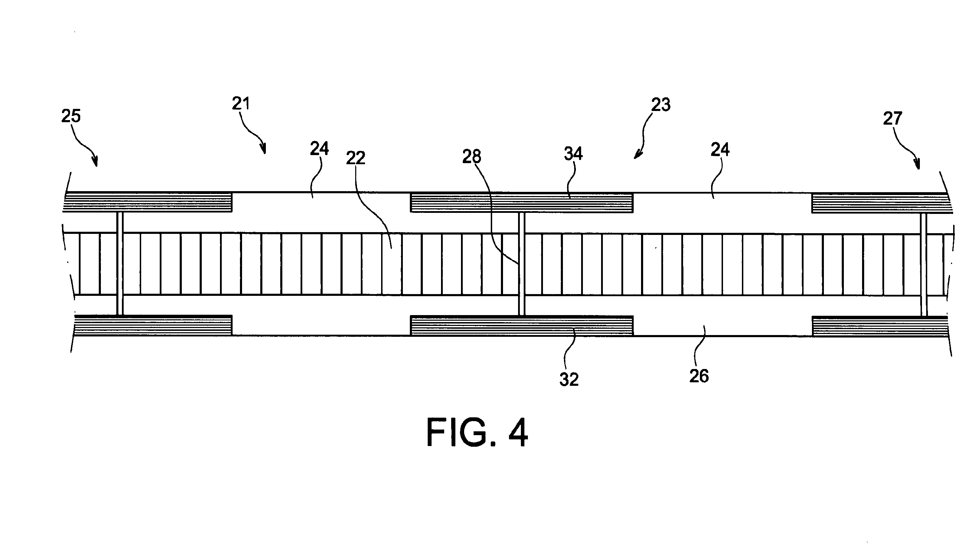

La figure 4 représente un assemblage comportant 4 panneaux 21, 23, 25, 27 dont 2 d'entre eux (21 et 23) sont représentés sur la totalité de leur largeur, tandis que les deux autres (25 et 27) ne sont que partiellement représentés. Un assemblage n'est pas limité à 4 panneaux mais peut en comporter n, n>4, par exemple n=10, ou 20, ou n > 20. On voit bien, également sur cette figure, la présence des bandes de renforts 32, 34, pour chaque ligne d'assemblage d'un panneau et d'un panneau voisin.

De même, on pourrait avoir un assemblage de n panneaux (n>3 ou n>4, par exemple n=10, ou 20, ou n > 20) avec des bandes de renforts 32, 34 disposées comme indiqué sur la figure 3C, c'est-à-dire sans rainure, les bandes étant enfoncée dans les panneaux par pression.

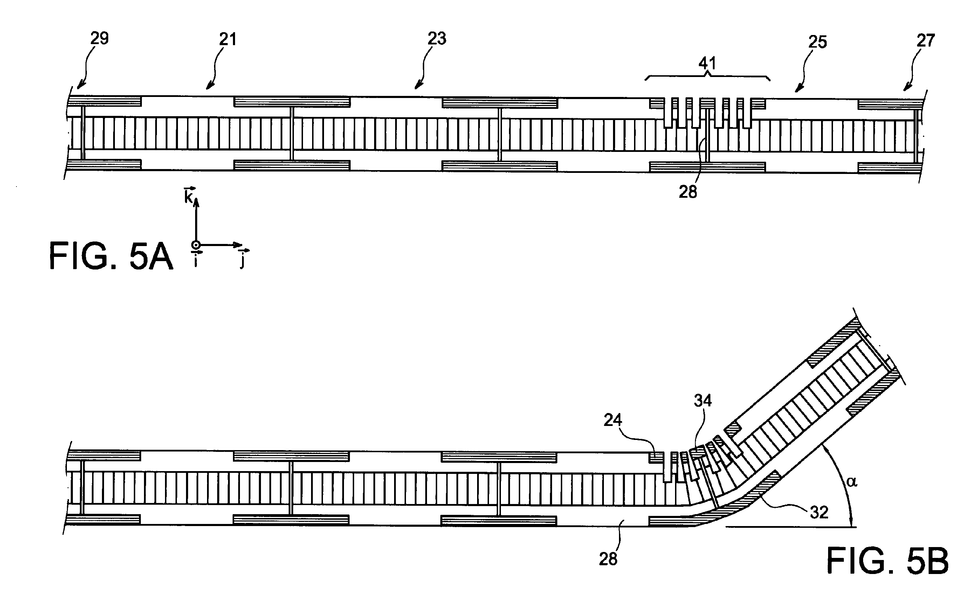

La figure 5A représente un assemblage comportant 5 panneaux 21, 23, 25, 27, 29 dont 4 d'entre eux sont représentés sur la totalité de leur largeur, tandis que les deux autres (29 et 27) ne sont que partiellement représentés. La présence des bandes de renforts, pour chaque ligne d'assemblage, est bien visible. 2 des panneaux sont munis d'un ensemble 41 de fentes ou d'entailles, de part et d'autre de la ligne d'assemblage 28, sur toute la longueur de celle ci. Les assemblages représentés ont tous des encoches, ou rainures, pour y introduire les bandes de renforts. Mais, là encore, on peut mettre en oeuvre une structure telle que celle de la figure 3C, sans encoche ni rainure.

Ces fentes ou entailles ont une profondeur, sous la surface extérieure définie par la peau 24, qui peut être variable, mais qui peut être suffisante pour déboucher dans l'âme 22 des panneaux.

Ces fentes ou entailles vont permettre de plier le panneau, après assemblage, selon un axe, parallèle à l'axe Oi et situé le long de la zone d'assemblage 28.

Après pliage, la structure a sensiblement la forme représentée en figure 5B. La surface extérieure de la peau 26 est, dans la zone de pliage, soumise à des forces de traction, tandis que la peau 24 est, elle, soumise à une contrainte en compression. Cette contrainte en compression au moins partiellement absorbée par les entailles 41 : les parois de chaque entaille, qui se situent à une certaine distance l'une de l'autre tout en se faisant face à face en position de repos (position représentée en figure 5A), se rapprochent l'une de l'autre lors du pliage de la structure, ce qui permet d'amortir sensiblement la compression.

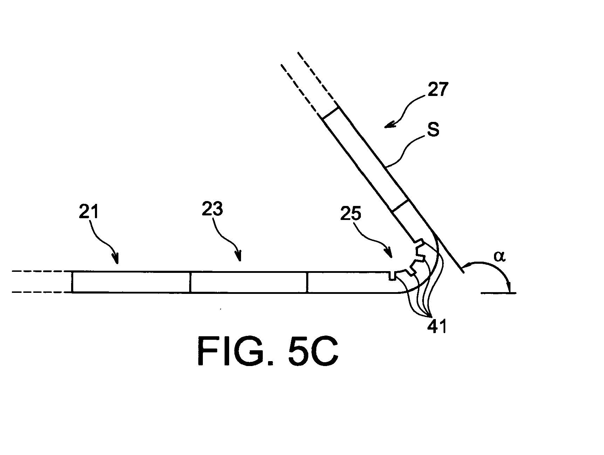

Le nombre, la largeur, la profondeur et la forme de ces entailles (dans un plan jk sensiblement perpendiculaire au plan défini par l'ensemble de la structure) dépendent de la souplesse de pliage que l'on souhaite atteindre, et de l'angle α que l'on souhaite obtenir entre les deux pans définis par les différents panneaux situés de part et d'autre de l'ensemble d'entailles. Cet angle α peut être compris entre quelques degrés, par exemple 10° et 90°. Il peut être supérieur à 90°, et, par exemple, inférieur à 160°, pour des applications dans lesquelles on a besoin d'une surface S d'appui, comme illustré en figure 5C, où sont représentés, schématiquement, les 5 panneaux 21, 23, 25, 27, 29.

Les entailles 41 sont représentées sur les figures 5A - 5C, 6A - 6B et 7, comme étant réalisées dans les zones de renfort, et parallèles à une ligne d'assemblage 28. Cependant, ces entailles peuvent être réalisées dans toute zone d'un panneau selon l'invention, et selon toute direction par rapport aux zones d'assemblage 28 ; en particulier, ces entailles peuvent être parallèles, ou perpendiculaire, à ces zones d'assemblage.

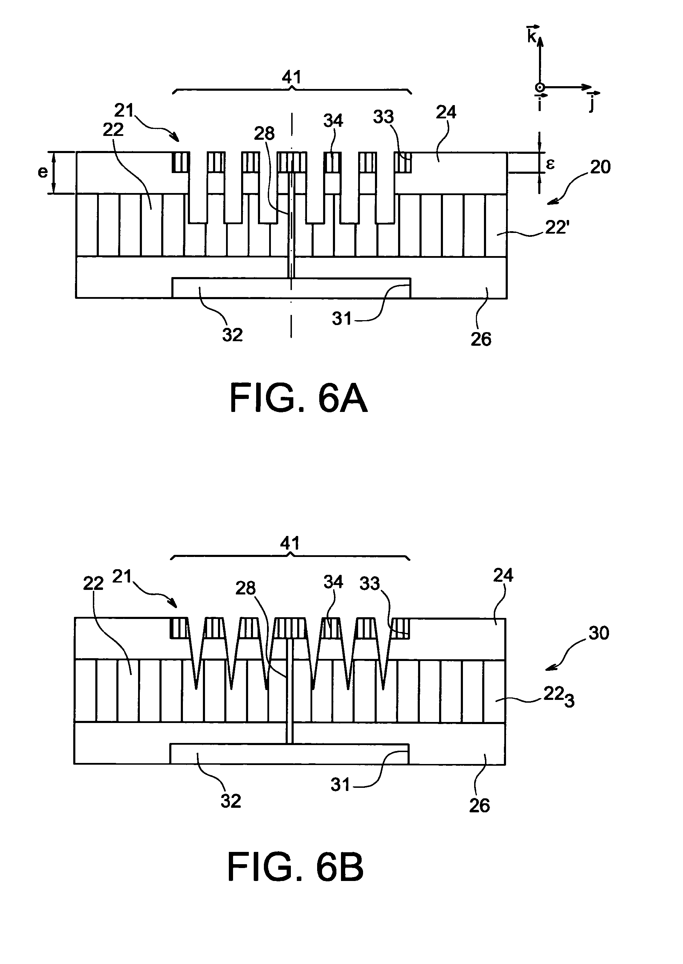

On a représenté, en figures 6A et 6B, des vues agrandies de la zone d'assemblage 28, avec les entailles 41 disposées de part et d'autre de celle-ci. On voit que, sur la figure 6A, les entailles ont un fond sensiblement plat, chaque entaille étant de forme sensiblement rectangulaire dans un plan perpendiculaire au plan défini par l'ensemble de la structure et perpendiculaire à la zone de soudage 28. Sur la figure 6B, chaque entaille a la forme, sensiblement, d'un triangle ou d'un triangle isocèle dans ce même plan, la pointe du triangle étant dans la masse du panneau. Les entailles peuvent donc avoir des formes variées, tout en conservant la fonction décrite ci-dessus lors d'un pliage de l'un des 2 pans de panneaux, situés de chaque côté de la zone d'assemblage 28, par rapport à l'autre.

Différentes techniques peuvent être utilisées pour éliminer de la peau sur une des surfaces pour permettre le pliage sur panneau :
- technique mécanique (usinage, ou découpe, ou ponçage, ou meulage, ...)
- technique thermique (montée en température et enfoncement de la surface) ;
- technique chimique (par dégradation chimique de la matière).

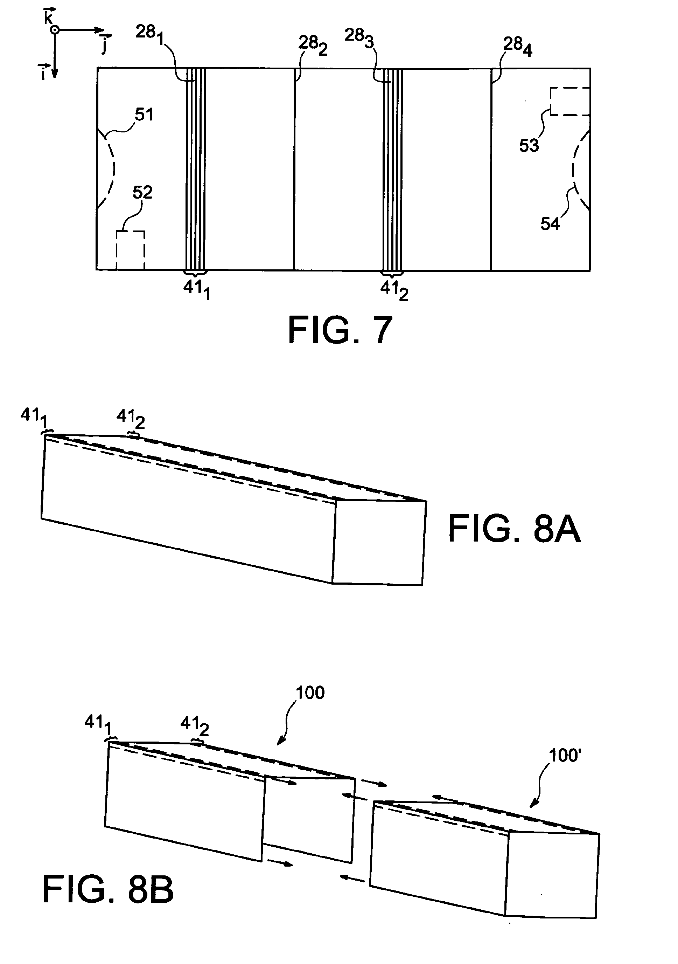

On a représenté, en figure 7, un ensemble de panneaux individuels assemblés, avec des lignes d'assemblage identifiées par les repères 28₁-28₄. De part et d'autre de 2 de ces lignes d'assemblage, 28₁ et 28₃, ont été réalisés des ensembles d'entailles 41₁, 41₃ qui vont permettre de réaliser un pliage de part et d'autre de ces mêmes lignes. Il est donc possible de réaliser une structure en trois dimensions, pliée le long de ces zones de pliage, sans nécessité d'assemblage de panneaux avec des éléments autres, tels que par exemple les cornières 16, 16' des figures 2A - 2B.

Les formes 51-54 en traits interrompus représentés en figure 7 correspondent à des découpes que l'on peut réaliser dans les panneaux, en fonction de l'utilisation que l'on aura de la structure, après que celle-ci ait été pliée. Ces découpes sont de préférence réalisées avant pliage, l'ensemble des panneaux étant alors encore dans un même plan.

On peut ensuite réaliser une structure pliée 100 telle que celle de la figure 8A, où les zones de pliage sont identifiées par les références 41₁,41₂ : ce sont des zones dans lesquelles on avait réalisé des encoches comme cela vient d'être décrit. Cette structure pliée peut être celle d'une carrosserie de remorque.

On peut également, comme représenté en figure 8B, assembler une pluralité 100, 100' de telles structures dont chacune est pliée comme expliqué ci-dessus, par exemple par l'intermédiaire de cornières ou par collage ou par soudure.

On a représenté, en figure 9A, un panneau élémentaire, avec son âme 22 et ses 2 peaux 24, 26. La structure de ce panneau est dite à bord franc. C'est la structure que l'on retrouve en figure 3A : latéralement, l'âme 22 est accessible et n'est pas couverte par une couche quelconque de matériau.

On a représenté, en figures 9B-9D, la réalisation d'une autre structure de panneau élémentaire, dite structure à bord fermé. Partant d'un panneau élémentaire à bord franc, une partie latérale de l'âme en est éliminée, pour laisser des portions latérales 24', 26' des peaux 24, 26 se faisant face, sans matière constitutive de l'âme entre les deux. On peut donc replier latéralement ces portions latérales 24', 26' de peaux, comme on le voit sur la figure 9C, et réaliser une fusion de ces portions latérales avec l'âme, étape qui est illustrée en figure 9D. On obtient alors ce qu'on appelle un panneau à bords fermés. Cette structure, dans laquelle le matériau constitutif de l'âme 22 est entièrement enrobé dans des parois, permet d'apporter un surcroît de rigidité par rapport à la structure à bord franc de la figure 9A.

On donne maintenant des exemples de structures de panneaux pouvant mettre être mis en oeuvre dans le cadre de la technique exposée dans la présente demande. Mais ces structures peuvent aussi être utilisées indépendamment des procédés et des structures de panneaux composites (avec zones de renfort) qui sont décrits dans la présente demande.

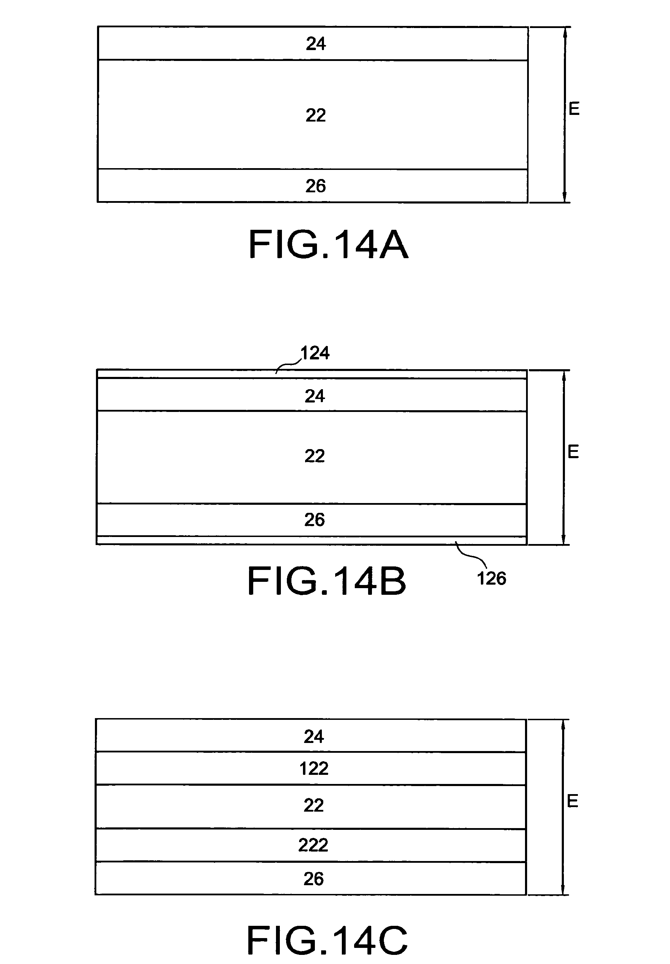

Un premier exemple concerne un panneau à âme alvéolaire par exemple en nid d'abeille, dont la structure est illustrée en figure 14A. Ce type de panneau comporte :
- 1 peau textile 24, par exemple en PP/verre (polypropylène (PP) renforcé par un renfort comme par exemple de la fibre de verre, par exemple à 40% (en masse, les %ages sont ensuite indiqués en masse) de PP et 60 % de fibres de verre, plus généralement, la peau peut contenir une proportion de fibres de verre comprise entre 10 % et 70 %).
- 1 âme alvéolaire 22 par exemple en en nid d'abeille, par exemple en polypropylène, dont la masse volumique par exemple comprise entre 30 kg/m³ et 500 kg/m³,
- 1 peau textile 26, par exemple en PP/verre (voir ci-dessus pour cette composition).

Les dimensions peuvent en être par exemple les suivantes (on adopte, dans cet exemple et dans les suivants, les mêmes notations que sur les figures 1A et 1B) :
- Epaisseur E comprise entre 5 et 100 mm ;
- Largeur l comprise entre 500 mm et 3000 mm
- Longueur L comprise entre 1000 et 13500 mm.

Un deuxième exemple concerne un panneau à âme en mousse de polypropylène (structure illustrée en figure 14A), qui comporte :
- 1 peau textile 24, par exemple en PP/ verre (voir ci-dessus pour cette composition),
- 1 âme 22 en mousse de polypropylène, dont la masse volumique par exemple comprise entre 30 kg/m³ et 500 kg/m³ ;
- 1 peau textile 26, par exemple en PP/ verre (voir ci-dessus pour cette composition).

Les dimensions de ce panneau peuvent être par exemple les suivantes :
- Epaisseur E comprise entre 5 mm et 100 mm,
- Largeur 1 comprise entre 500 mm et 3000 mm,
- Longueur L comprise entre 1000 mm et 13500 mm.

Un 3^{ème} exemple concerne un panneau avec revêtement polypropylène monolithique, dont la structure est illustrée en figure 14B, qui comporte :
- 1 feuille monolithique 124, par exemple en polypropylène,
- 1 peau textile 24, par exemple en PP/ verre (voir ci-dessus pour cette composition),
- 1 âme 22 alvéolaire par exemple en nid d'abeille, par exemple en polypropylène, dont la masse volumique par exemple comprise entre 30 kg/m³ et 500 kg/m³,

- 1 peau textile 26, par exemple en PP/ verre (voir ci-dessus pour cette composition),
- 1 feuille monolithique 126, par exemple en polypropylène.

Le rôle de chaque feuille est d'apporter un supplément de masse pour souder, et/ou une étanchéité améliorée et/ou une surface extérieure anti-dérapante...

C'est dans les peaux textile 24,26, que l'on réalise, éventuellement, les encoches ou rainures 31, 33, dans chacune desquelles on pourra ensuite insérer une bande de renfort 32, 34, comme expliqué ci-dessus en liaison avec les figures 3A et 3B (en variante, on ne réalise pas d'encoches, et les bandes de renfort sont disposées comme expliqué ci-dessus en liaison avec la figure 3C).

Les dimensions de ce panneau peuvent être les suivantes :
- Epaisseur E comprise entre 5 et 100 mm
- Largeur l comprise entre 500 et 3000 mm
- Longueur L comprise entre 1000 et 13500 mm.

Un 4^{ème} exemple concerne un panneau à âme mixte ou hybride ou complexe (par exemple : nida PP + mousse polypropylène) dont la structure est illustrée en figure 14C, qui comporte :
- 1 peau textile 24, par exemple en PP/Glass,
- 1 âme 122 en mousse, par exemple on polypropylène, (masse volumique par exemple comprise entre 30 kg/m³ et 500 kg/m³),
- 1 âme 22 alvéolaire par exemple en nid d'abeille, par exemple en polypropylène,
- 1 âme 222 en mousse, par exemple en polypropylène (voir ci-dessus pour masse volumique),
- 1 peau textile 26, par exemple en PP/ verre (voir ci-dessus pour cette composition).

Une telle structure présente de très bonnes propriétés mécaniques et thermiques. Chacune des âmes 122, 222 a une épaisseur qui peut être par exemple comprise entre 3 mm et 5 mm. Ces deux parties de l'âme contribuent à des performances thermiques améliorées, la tenue mécanique de l'ensemble étant principalement assurée par l'âme centrale 22, mais aussi par les bandes de renfort 32, 34 , qui peuvent être disposées dans des éventuelles encoches ou rainures 31, 33. Ces dernières seront réalisées dans les peaux textiles 24,26. Dans chacune de ces encoches on pourra ensuite insérer une bande de renfort 32, 34, comme expliqué ci-dessus en liaison avec les figures 3A et 3B. Si il n'y a pas d'encoche, les bandes de renfort sont disposées comme expliqué ci-dessus en liaison avec la figure 3C.

Les dimensions de ce panneau peuvent être les suivantes :
- Epaisseur E comprise entre 5 mm et 100 mm,
- Largeur l comprise entre 500 mm et 3000 mm,
- Longueur L comprise entre 1000 mm et 13500 mm.

Chacun des exemples de panneaux ci-dessus peut être fabriqué soit avec des bords dits « francs » ou soit avec des bords dits « fermés », comme déjà expliqué ci-dessus en liaison avec les figures 9A-9D.

On donne ci-dessous un exemple de réalisation d'un procédé d'assemblage de panneaux composites.

De manière concise, on réalise :
- un assemblage des panneaux élémentaires;
- une élimination des bavures résultant de l'opération précédente et, éventuellement, la formation de rainures dans les peaux ; on peut aussi ne pas réaliser de rainures, en vue d'un assemblage tel que celui de la figure 3C ;
- l'insertion d'éléments ou de bandes de renfort, dans les rainures (si elles sont présentes) dans les peaux, par pression, puis une fixation de ces éléments ou bandes de renfort, par exemple par thermofusion, y compris dans le cas de la figure 3C.

Si des entailles telles que les entailles 41 des figures 5A-6B doivent être réalisés, elles le sont de préférence seulement ensuite, après formation des renforts.

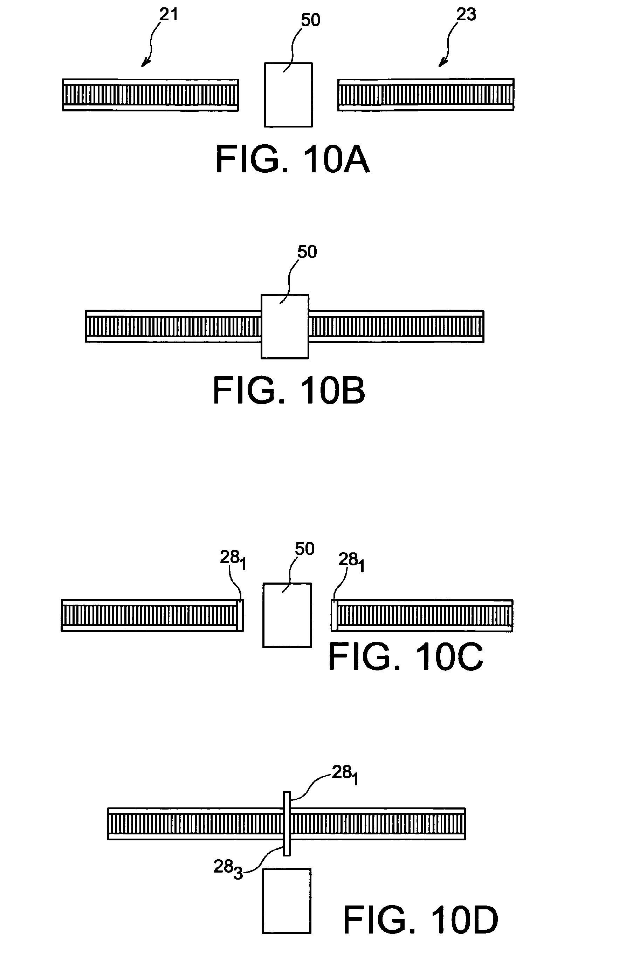

On explique d'abord comment on peut réaliser un soudage de 2 panneaux, en liaison avec les figures 10A-10D.

Pour cela, on soude 2 panneaux 21, 23 ensemble, par 2 de leurs côtés, bord à bord, sans élément intermédiaire entre deux bords voisins à assembler, par une montée en température de chaque tranche des panneaux à souder : par exemple, on met une portion latérale de chacun des panneaux 21,23 en contact avec un élément chauffant 50 (figures 10A et 10B). On écarte ensuite les deux panneaux de l'élément chauffant : sur les bords qui ont été en contact avec ce dernier, une partie 22₁, 22₃, de la matière, constitutive de l'âme 22, est maintenant en fusion. Les portions en fusion sont mises en contact l'une avec l'autre (figure 10D), puis l'ensemble est refroidi. On obtient donc une structure constituée des deux panneaux 21,23, reliés par une zone 28 de soudure dont une portion peut dépasser, sous forme de bavures 28₁, 28₃, de chaque côté de l'ensemble assemblé.

Il peut s'agir de panneaux de l'un quelconque des types expliqués ci-dessus, en liaison avec les figures 14A-14C.

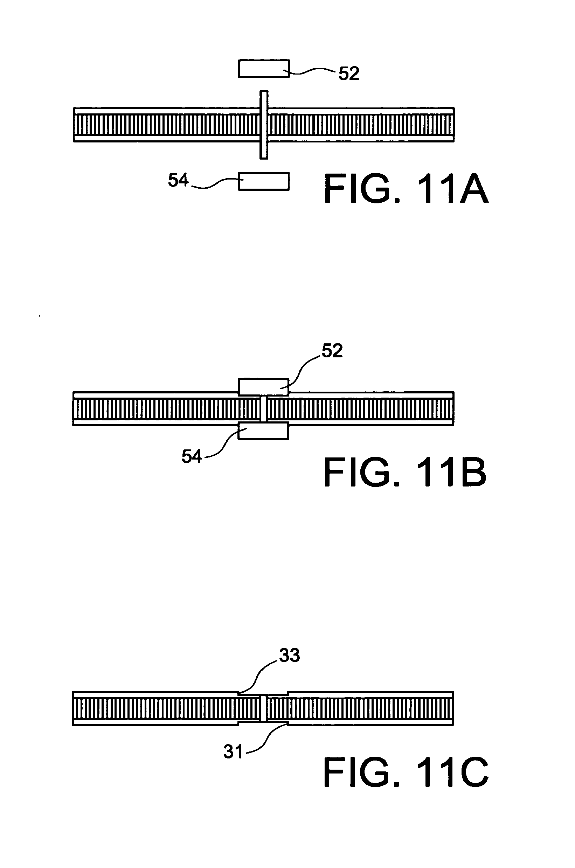

On peut ensuite réaliser une opération d'ébavurage des soudures (figures 11A - 11C), sur chaque côté de la structure à l'aide d'un outil, par exemple une fraise 52, 54, pour supprimer, sur chacune des faces, les bavures 28₁, 28₃ générées par l'opération de soudage (figures 11A - 11B). Lors de cette opération, on peut réaliser également (figure 11C), de préférence avec le même outil 52, 54, une rainure 31, 33 dans chacune des peaux, chacune de ces rainures étant, comme déjà expliqué ci-dessus en liaison avec les figures 3A et 3B, centrée sur la soudure 28 et de profondeur qui peut être par exemple environ égale à une demi-épaisseur de la peau.

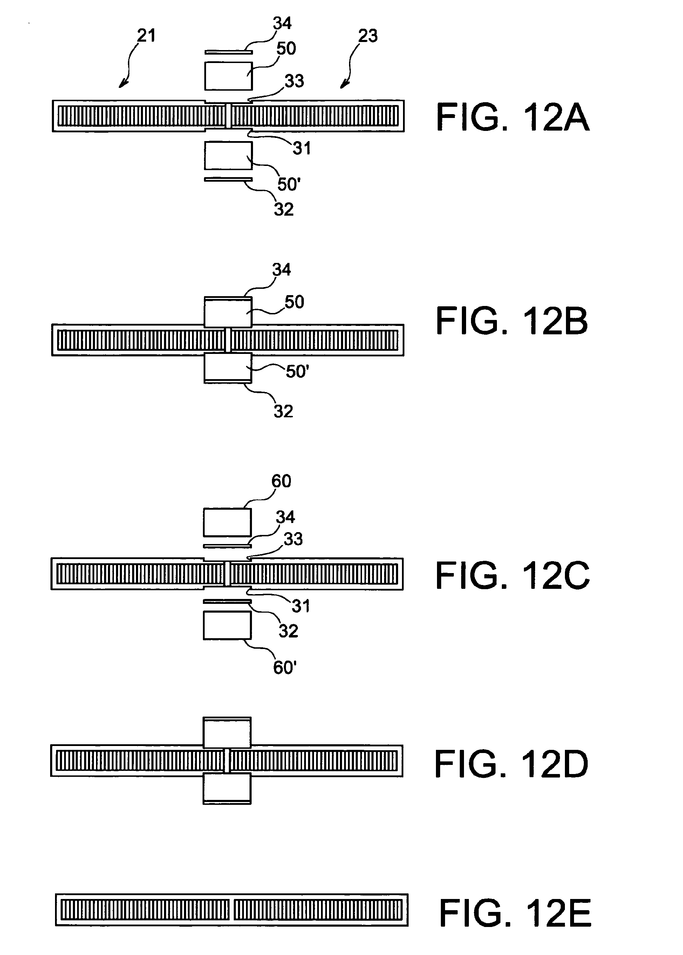

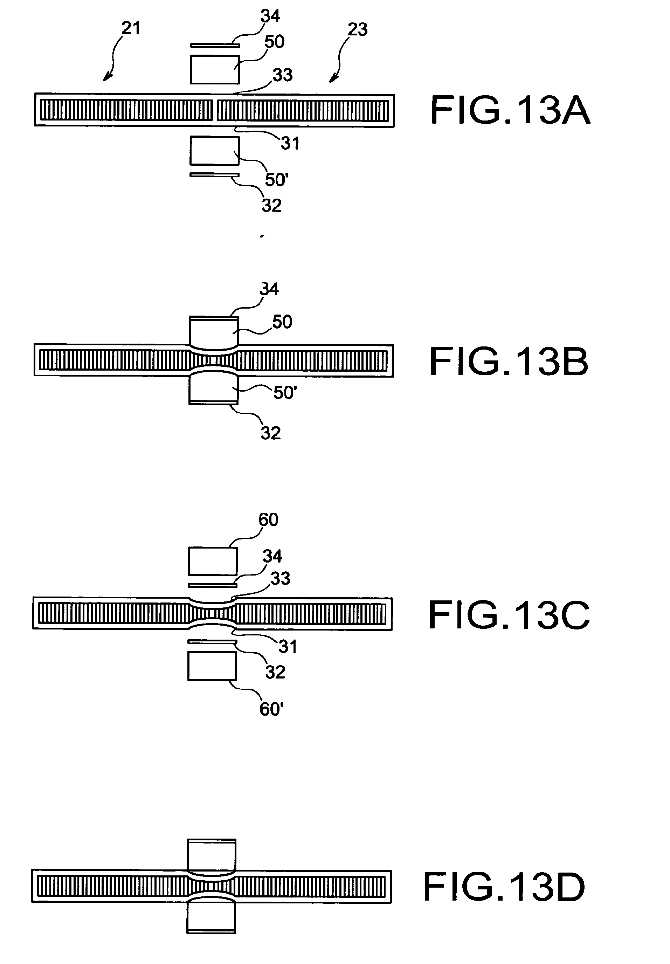

Un renforcement des soudures peut être obtenu à l'aide d'une ou plusieurs bandes (de préférence : une sur chaque face) de textile, comme illustrée sur les figures 12A - 12E et comme déjà expliqué ci-dessus en liaison avec les figures 3A-3B ou comme illustré sur les figures 13A - 13E et comme déjà expliqué ci-dessus en liaison avec la figure 3C. Cette bande de textile est par exemple en polypropylène renforcé par des fibres de verre.

En figures 12A et 12B, des éléments chauffants 50, 50' sont mis en contact avec les rainures 31,33 qui ont été précédemment formées.

De même, on met les éléments chauffants en contact avec des bandes 32, 34 de renfort, destinées à être insérées dans les rainures 31,33. De préférence, l'élément chauffant chauffe simultanément une rainure 31 (respectivement 33) et la bande de matériau 32 (respectivement 34) destinée à y être insérée.

On éloigne ensuite les éléments chauffants, et on positionne les bandes de matériaux 32,34, en face de la rainure 31,33 dans laquelle chacune doit être insérée.

On peut alors approcher des moyens ou éléments 60, 60' en vue de refroidir la matière de ces bandes 32,34 (figure 12C). Ces dernières sont mises en contact avec les rainures correspondantes et pressées contre le fond de celles-ci à l'aide des moyens 60, 60' (figure 12D). Il en résulte une structure telle que celle de la figure 12E, qui correspond, de manière plus détaillée, à celle de la figure 3B.

Une autre réalisation d'un procédé selon l'invention est exposée en liaison avec les figures 13A - 13D.

On part alors d'une structure assemblée, telle que celle de la figure 10D, qui peut avoir subit une éventuelle étape pour supprimer des bavures 28₁, 28₂, (mais, cette fois, sont formées des rainures 31,33)

En figures 13A et 13B, des éléments chauffants 50, 50' sont mis en contact avec les surfaces de peaux, là où les bandes de renforts 32,34 seront positionnées.

De même, on met les éléments chauffants en contact avec ces bandes 32, 34 de renfort. De préférence, l'élément chauffant chauffe simultanément la bande de renfort 32, 34 et la partie de la surface de l'une des peaux sur laquelle cette même bande de matériau 32, 34 de renfort doit être positionnée. Lors de cette étape, une pression peut être exercée pour commencer à « enfoncer » les zones correspondantes des peaux vers l'intérieur des panneaux.

On éloigne ensuite les éléments chauffants, et on positionne les bandes de matériaux 32,34, sur les zones des peaux sur lesquelles, ou dans lesquelles, ces bandes doivent être insérées.

On peut alors approcher des moyens ou éléments 60, 60' en vue de refroidir la matière de ces bandes 32,34 (figure 13C). Là encore, une pression peut être exercée pour appuyer sur les bandes en vue de les positionner dans les peaux, comme illustré en figure 3C. Les bandes sont donc pressées à l'aide des moyens 60, 60' (figure 13D). Il en résulte une structure telle que celle de la figure 13D, qui correspond, de manière plus détaillée, à celle de la figure 3C.

Dans ce mode de réalisation, l'affleurement de chaque bande avec les panneaux est réalisé en appliquant une pression pendant la phase de chauffage et de refroidissement des surfaces.

On a décrit ci-dessus une mise en ouevre par une technologie de chauffage par contact des bandes et des panneaux, mais il y a d'autres techniques de chauffage possibles.

On peut notamment mettre en oeuvre une technique de chauffage qui ne fait pas appel à un contact, par exemple par lampes infra-rouge.

Le procédé décrit ci-dessus en liaison avec les figures 10A-10C se déroule alors de la même manière, excepté pour la mise en contact de l'élément chauffant 50 avec chacun des panneaux 21,23, que l'on remplace par un chauffage des bords de chacun des panneaux par une technique sans contact, en dirigeant par exemple le rayonnement d'une ou plusieurs lampes infrarouge vers ces bords.

Les procédés décrits ci-dessus en liaison avec les figures 12A-12E et 13A - 13D se déroulent également de la manière déjà décrite ci-dessus, excepté pour la technique de chauffage : on ne met plus les panneaux et/ou les bandes de renforts en contact direct avec un élément chauffant 50, 50', mais ces éléments sont chauffés par une technique sans contact, par exemple d'une ou plusieurs lampes à infrarouge. Dans le cas des figures 13A - 13D, la pression, qui va permettre d'enfoncer les zones des peaux vers l'intérieur des panneaux, est exercée par un autre outil que l'élément de chauffage.

Dans le cas de la structure de la figure 14B, on peut ensuite recouvrir l'ensemble par les feuilles 124, 126.

Des tests mécaniques ont été réalisés, ces tests ont conduit aux mesures présentées en tableau I ci-dessous.

Les premières caractérisations ont consisté à comparer le comportement en flexion d'éprouvettes prélevées lors d'une fabrication standard et d'éprouvettes de panneaux assemblés selon le procédé détaillé précédemment.

La structure de panneau simple est une structure du type de la figure 14A, avec une âme 22 en nida, composé de polypropylène de 60 kg/m³ à 200 kg/m³ (par exemple à 80 kg/m³), munie de peaux 24, 26, en polypropylène/verre, 40 % de PP et 60 % de verre, les fibres longues étant orientées 0-90. Ces panneaux sont renforcés avec une bande 32,34.

La structure des panneaux assemblés selon l'invention est identique.

**Tableau I**

| **Type de panneaux** | **Accroissement du module de flexion** |
|---|---|
| Panneau simple (sans assemblage ni bord fermé) | 100% |
| Panneaux assemblés selon l'invention avec bords « francs » | 184% |
| Panneaux assemblés selon l'invention, avec bords « fermés » | 200% |

Le tableau I met en évidence que la technologie d'assemblage de panneaux, présentée ci-dessus, améliore considérablement les caractéristiques de flexion des panneaux composites thermoplastiques.

L'enseignement de la présente demande, concernant tant le procédé de réalisation que les panneaux eux-mêmes, permet donc d'atteindre un renforcement significatif des panneaux, ainsi qu'une utilisation beaucoup plus souple que les panneaux actuellement connus.

## Revendications

1. Panneau composite, comprenant:
- une pluralité de panneaux composites élémentaires (21, 23), chacun comportant au moins une âme (22₁, 22₃) et deux peaux (24, 26) superficielles disposées de part et d'autre de l'âme, et chacun étant thermosoudé selon une zone d'assemblage (28) avec au moins un panneau élémentaire voisin par l'un de ses côtés,
le panneau composite étant **caractérisé en ce qu'**il comprend en outre :
- une zone de renfoncement, ou en creux (31, 33) formée dans les peaux (24, 26) superficielles, de part et d'autre de la zone d'assemblage (28) et le long de celle-ci,
- une bande (32, 34) de matière de renfort disposée sur ladite zone d'assemblage (28) d'un panneau avec le ou les panneaux voisins, dans chaque zone de renfoncement, ou en creux (31, 33).

2. Panneau composite selon la revendication 1, dans lequel l'âme (22) d'un panneau composite élémentaire comporte au moins une couche matériau alvéolaire.

3. Panneau composite selon la revendication 1 ou 2, dans lequel l'âme (22) d'un panneau composite élémentaire comporte au moins une couche en mousse de polypropylène.

4. Panneau composite selon l'une des revendications 1 à 3, comportant en outre des feuilles extérieures (124, 126), par exemple en polypropylène, recouvrant les peaux (24, 26) et les bandes (32,34) de matière de renfort.

5. Panneau composite selon l'une des revendications 1 à 4, dans lequel les peaux superficielles (24, 26) sont en textile ou en polypropylène renforcé.

6. Panneau composite selon l'une des revendications précédentes, dans lequel :
- la surface extérieure des bandes (32, 34) de renfort affleure la surface extérieure des panneaux voisins,
- ou bien dans lequel la surface extérieure des bandes (32, 34) de matières de renfort est en élévation par rapport à la surface extérieure des panneaux voisins.

7. Panneau composite selon l'une des revendications 1 à 5, comportant en outre au moins une entaille (41), formée au moins dans une bande de renfort (32, 34), cette entaille formant au moins une zone de pliage et permettant un pliage du panneau selon la direction de cette entaille,
au moins une entaille (41), étant disposée suivant une direction parallèle, ou suivant une direction perpendiculaire auxdites bandes de matière de renfort.

8. Panneau composite selon l'une des revendications 1 à 7, comportant au moins une zone de pliage ou de cintrage ou de courbure, chacune comportant au moins une échancrure (41) formée au moins dans une bande de renfort (32, 34) et disposée suivant une direction parallèle auxdites bandes de matière de renfort.

9. Panneau composite selon l'une des revendications 1 à 8, ayant :
- une largeur, mesurée suivant une direction parallèle aux bandes de matière de renfort, comprise entre 0,5 m et 5 m ou 10 m ;
- et/ou une longueur, mesurée suivant une direction perpendiculaire aux bandes de matière de renfort, comprise entre 1 m et 20 m et/ou au moins égale à 5 m ou à 10 m ;
- et/ou une épaisseur, mesurée entre les surfaces extérieures des parois superficielles, comprise entre 5 mm et 100 mm.

10. Panneau composite selon l'une des revendications 1 à 9, chaque zone de renfoncement, ou en creux :
- comportant une rainure (31) pratiquée dans la peau correspondante ;
- ou résultant de la pénétration d'une portion (24₃, 26₃) de peau dans l'âme, l'épaisseur de la portion correspondante de l'âme étant réduite par rapport à la, ou aux zones voisines, n'ayant pas subi cette pénétration.

11. Procédé de fabrication d'un panneau composite comprenant :
a) - l'assemblage d'une pluralité de panneaux composites élémentaires (21, 23), chacun comportant au moins une âme (22) et deux peaux superficielles (24, 26), chaque panneau étant assemblé avec au moins un panneau élémentaire voisin par thermosoudure, par l'un de ses côtés,
le procédé étant **caractérisé en ce qu'**il comprend en outre :
b) - la fixation d'au moins une bande (24, 26) de matière de renfort sur chaque zone d'assemblage (28) d'un panneau avec le ou les panneaux voisins, dans une ou plusieurs zone de renfoncement, ou en creux, du panneau.

12. Procédé selon la revendication précédente, comportant la formation d'une rainure (31,33) dans les peaux (24, 26) superficielles, de part et d'autre d'une zone d'assemblage (28) et le long de celle-ci, ladite bande de matière de renfort étant fixée dans ladite rainure.

13. Procédé selon la revendication 11, comportant la formation d'une zone de renfoncement, ou en creux, par application d'une pression sur la portion du panneau qui doit recevoir ladite bande de matière de renfort,
le procédé comportant, avant l'étape b), une étape de chauffage de chaque panneau composite élémentaire, dans les parties dans lesquelles les zones de renfoncement, ou en creux, sont à réaliser, et l'application d'une pression depuis la surface extérieure du panneau vers l'âme,
le procédé dans lequel on réalise en outre, avant l'étape b), un chauffage de la bande de matière de renfort (32, 34),
l'étape b) étant réalisée par thermo-fusion ou thermo-soudure.

14. Procédé selon l'une des revendications 11 à 13, comportant en outre la formation d'au moins une entaille (41) dans au moins l'un des panneaux, cette entaille permettant un pliage du panneau selon sa direction.

15. Procédé de réalisation d'une forme tridimensionnelle comportant une pluralité de panneaux composites, comportant la mise en oeuvre d'un procédé selon la revendication précédente, puis une étape de pliage selon au moins une desdites entailles.

16. Procédé selon l'une des revendications 11 à 15, comportant en outre une étape d'élimination de bavures (281, 282) après assemblage des panneaux,
le procédé comportant en outre l'élimination d'une zone de matière (51-54) dans au moins un des panneaux élémentaires.

## Patentansprüche

1. Verbundplatte, umfassend:
- eine Vielzahl von elementaren Verbundplatten (21, 23), die jeweils mindestens einen Kern (22₁, 22₃) und zwei oberflächliche Häute (24, 26) umfassen, die auf beiden Seiten des Kerns angebracht sind, und jeweils heißgesiegelt entlang einem Montagebereich (28) mit mindestens einer benachbarten elementaren Platte an einer ihrer Seiten,
wobei die Verbundplatte **dadurch gekennzeichnet ist, dass** sie außerdem Folgendes umfasst:
- einen Verstärkungs- oder Hohlbereich (31, 33), der in den zwei oberflächlichen Häuten (24, 26) gebildet ist, auf beiden Seiten des Montagebereichs (28) und entlang dieses,
- einen Streifen (32, 34) aus Verstärkungsmaterial, angeordnet auf dem Montagebereich (28) einer Platte mit dem oder den benachbarten Platten in jedem Verstärkungs- oder Hohlbereich (31, 33).

2. Verbundplatte nach Anspruch 1, wobei der Kern (22) einer elementaren Verbundplatte mindestens eine Schicht aus Schaumstoffmaterial umfasst.

3. Verbundplatte nach Anspruch 1 oder 2, wobei der Kern (22) einer elementaren Verbundplatte mindestens eine Schicht aus Polypropylenschaum umfasst.

4. Verbundplatte nach einem der Ansprüche 1 bis 3, umfassend außerdem äußere Blätter (124, 126), z.B. aus Polypropylen, die die Häute (24, 26) und die Streifen (32, 34) aus Verstärkungsmaterial bedecken.

5. Verbundplatte nach einem der Ansprüche 1 bis 4, wobei die oberflächliche Häute (24, 26) aus Textil oder aus verstärktem Polypropylen sind.

6. Verbundplatte nach einem der vorhergehenden Ansprüche, wobei
- die Außenfläche der Verstärkungsstreifen (32, 34) die Außenfläche der benachbarten Platten abschließt,
- oder in der die Außenfläche der Streifen (32, 34) aus Verstärkungsmaterial mit Bezug auf die Außenfläche der benachbarten Platten erhöht ist.

7. Verbundplatte nach einem der Ansprüche 1 bis 5, umfassend mindestens eine Einkerbung (41), die mindestens in einem Verstärkungsstreifen (32, 34) gebildet ist, wobei diese Einkerbung mindestens einen Biegebereich bildet und ein Biegung der Platte gemäß der Richtung dieser Einkerbung ermöglicht,
wobei mindestens eine Einkerbung (41), die gemäß einer parallelen Richtung oder gemäß einer senkrechten Richtung zu den Streifen aus Verstärkungsmaterial angeordnet ist.

8. Verbundplatte nach einem der Ansprüche 1 bis 7, umfassend mindestens einen Biege- oder Rundungs- oder Krümmungsbereich, von denen jeder mindestens eine Aussparung (41) aufweist, die mindestens in einem Verstärkungsstreifen (32, 34) gebildet und gemäß einer parallelen Richtung zu den Streifen aus Verstärkungsmaterial angeordnet ist.

9. Verbundplatte nach einem der Ansprüche 1 bis 8, umfassend:
- eine Breite, gemessen gemäß einer parallelen Richtung zu den Streifen aus Verstärkungsmaterial, zwischen 0,5 m und 5 m oder 10 m;
- und/oder eine Länge, gemessen gemäß einer senkrechten Richtung zu den Streifen aus Verstärkungsmaterial, zwischen 1 m und 20 m und/oder mindestens gleich 5 m oder 10 m.
- und/oder eine Dicke, gemessen zwischen den Außenflächen der oberen Wände, zwischen 5 mm und 100 mm.

10. Verbundplatte nach einem der Ansprüche 1 bis 9, wobei jeder Verstärkungs- oder Hohlbereich:
- eine Nut (31) umfasst, die in der entsprechenden Haut angebracht ist;
- oder sich aus der Eindringung eines Abschnitts (24₃, 26₃) der Haut in den Kern ergibt, wobei die Dicke des entsprechenden Abschnitts des Kerns mit Bezug auf (die) benachbarte(n) Bereiche reduziert ist, die diese Eindringung nicht unterzogen wurden.

11. Verfahren zur Herstellung einer Verbundplatte, umfassend:
a) die Montage einer Vielzahl von elementaren Verbundplatten (21, 23), die jeweils mindestens einen Kern (22) und zwei oberflächliche Häute (24, 26) umfassen, wobei jede Platte mit mindestens einer benachbarten elementaren Platte durch Heißsiegelung an einer ihrer Seiten montiert ist,
wobei das Verfahren **dadurch gekennzeichnet ist, dass** es außerdem Folgendes umfasst:
b) - die Fixierung von mindestens einem Streifen (24, 26) aus Verstärkungsmaterial auf jedem Montagebereich (28) einer Platte mit dem oder den benachbarten Platten in einem oder in mehreren Verstärkungs- oder Hohlbereichen der Platte.

12. Verfahren nach dem vorhergehenden Anspruch, umfassend die Bildung einer Nut (31, 33) in den oberen Häuten (24, 26) auf beiden Seiten eines Montagebereichs (28) und entlang dieses, wobei der Streifen aus Verstärkungsmaterial in der Nut fixiert ist.

13. Verfahren nach Anspruch 11, umfassend die Bildung eines Verstärkungs- oder Hohlbereichs durch die Anwendung eines Drucks auf den Abschnitt der Platte, der den Streifen aus Verstärkungsmaterial aufnehmen muss.
wobei das Verfahren, vor dem Schritt b), einen Schritt des Erhitzens jeder elementaren Verbundplatte in den Teilen umfasst, in denen die Verstärkungs- oder Hohlobereiche durchzuführen sind, und die Anwendung eines Drucks von der Außenfläche der Platte auf den Kern,
das Verfahren, in dem außerdem, vor dem Schritt b), einer Erhitzung des Streifens aus Verstärkungsmaterial (32, 34) durchgeführt wird,
wobei der Schritt b) durch Heißschmelzen oder Heißsiegelung durchgeführt wird.

14. Verfahren nach einem der Ansprüche 11 bis 13, umfassend außerdem die Bildung von mindestens einer Einkerbung (41) in mindestens einer der Platten, wobei diese Einkerbung eine Biegung der Platte gemäß ihrer Richtung ermöglicht.

15. Verfahren zur Herstellung einer dreidimensionalen Form, umfassend eine Vielzahl von Verbundplatten, umfassend die Durchführung eines Verfahrens gemäß dem vorhergehenden Anspruch, dann eines Schritts des Biegens gemäß mindestens einer der Einkerbungen.

16. Verfahren nach einem der Ansprüche 11 bis 15, umfassend außerdem mindestens einen Schritt des Beseitigens von Graten (281, 282) nach der Montage der Platten,
wobei das Verfahren außerdem die Beseitigung eines Materialbereichs (51-54) in mindestens einer der elementaren Platten umfasst.

## Claims

1. A composite panel, comprising:
- a plurality of elementary composite panels (21, 23), each including at least one core (22₁, 22₃) and two surface skins (24, 26) disposed on either side of the core, and each being heat-welded along an assembly area (28), with at least one adjacent elementary panel by one of its sides,
the composite panel being **characterized in that** it further comprises:
- a reinforcement or recessed (31, 33) area formed in the surface skins (24, 26), on either side of the assembly area (28) and along the latter,
- a reinforcing material strip (32, 34) disposed on said assembly area (28) of a panel with the adjacent panel(s), in each reinforcement or recessed (31, 33) area.

2. The composite panel according to claim 1, wherein the core (22) of an elementary composite panel includes at least one layer made of cellular material.

3. The composite panel according to claim 1 or 2, wherein the core (22) of an elementary composite panel includes at least one layer made of polypropylene foam.

4. The composite panel according to any of claims 1 to 3, further including outer sheets (124, 126), for example made of polypropylene, covering the skins (24, 26) and the reinforcing material strips (32, 34).

5. The composite panel according to any of claims 1 to 4, wherein the surface skins (24, 26) are made of textile or of reinforced polypropylene.

6. The composite panel according to any of the preceding claims, wherein:
- the outer surface of the reinforcing strips (32, 33) is flush with the outer surface of the adjacent panels,
- or wherein the outer surface of the reinforcing material strips (32, 34) is raised relative to the outer surface of the adjacent panels.

7. The composite panel according to any of claims 1 to 5, further including at least one notch (41), formed at least in a reinforcing strip (32, 34), this notch forming at least one folding area and enabling folding of the panel along the direction of this notch,
at least one notch (41), being disposed along a direction parallel or perpendicular to said reinforcing material strips.

8. The composite panel according to any of claims 1 to 7, including at least one folding or bending or curvature area, each including at least one indentation (41) formed at least in a reinforcing strip (32, 34) and disposed along a direction parallel to said reinforcing material strips.

9. The composite panel according to any of claims 1 to 8, having:
- a width, measured along a direction parallel to the reinforcing material strips, comprised between 0.5 m and 5 m or 10 m ;
- and/or a length, measured along a direction perpendicular to the reinforcing material strips, comprised between 1 m and 20 m and/or at least equal to 5 m or 10 m ;
- and/or a thickness, measured between the outer surfaces of the surface skins, comprised between 5 mm and 100 mm.

10. The composite panel according to any of claims 1 to 9, each reinforcement or recessed area:
- including a groove (31) performed in the corresponding skin ;
- or resulting from the penetration of a portion (24₃, 26₃) of the skin into the core, the thickness of the corresponding portion of the core being reduced relative to the adjacent area(s) which has/have not undergone this penetration.

11. A method for manufacturing a composite panel comprising:
a) - assembling a plurality of elementary composite panels (21, 23), each including at least one core (22) and two surface skins (24, 26), each panel being assembled with at least one adjacent elementary panel by heat-welding, by either of its sides,
the method being **characterized in that** it further comprises:
b) - fixing at least one reinforcing material strip (24, 26) on each assembly area (28) of a panel with the adjacent panel(s), in one or several reinforcement or recessed area(s) of the panel.

12. The method according to the preceding claim, including the formation of a groove (31, 33) in the surface skins (24, 26), on either side of an assembly area (28) and along the latter, said reinforcing material strip being fixed in said groove.

13. The method according to claim 11, including the formation of a reinforcement or recessed area, by applying a pressure on the portion of the panel which should receive said reinforcing material strip,
the method including, prior to step b), a step of heating each elementary composite panel, in portions wherein the reinforcement or recessed areas are to be realized, and the application of a pressure from the outer surface of the panel toward the core,
the method wherein heating of the reinforcing material strip (32, 34) is further carried out prior to step b),
step b) being carried out by heat-melting or heat-welding.

14. The method according to any of claims 11 to 13, further including the formation of at least one notch (41) in at least one of the panels, this notch enabling folding of the panel along its direction.

15. A method for realizing a three-dimensional shape including a plurality of composite panels, including the implementation of a method according to the preceding claim, then a step of folding along at least one of said notches.

16. The method according to any of claims 11 to 15, further including a step of removing burrs (281, 282) after assembling the panels,
the method further including removal of a material area (51-54) in at least one of the elementary panels.
